# FASCICULE DE BREVET EUROPEEN

(11) **EP 0 446 127 B1**
(45) Date de publication et mention de la délivrance du brevet: **02.11.1995**
(21) Numéro de dépôt: 91400606.9
(22) Date de dépôt: 05.03.1991
(51) Int. Cl.: B32B 17/10, C03C 27/12

(54) **Dispositif pour l'assemblage par pressage des vitrages feuilletés**
Vorrichtung zum Zusammenfügen durch Pressen von Verbundgläsern
Apparatus for assembly by pressing of laminated glass

(30) Priorité: 08.03.1990 FR 9002921
(43) Date de publication de la demande: 11.09.1991
(73) Titulaire: SAINT-GOBAIN VITRAGE, 92400 Courbevoie (FR)
(72) Inventeur: Didelot, Claude, F-60150 Thourotte (FR); Wattiau, Gilles, F-60400 Baboeuf (FR)
(74) Mandataire: Muller, René

(56) Documents cités:
- EP-A- 0 189 345
- DE-A- 3 518 185
- FR-A- 807 069
- FR-A- 2 288 567

## Description

La présente invention concerne la fabrication des vitrages feuilletés et en particulier un dispositif pour l'assemblage des éléments constitutifs d'un vitrage feuilleté par pressage, en particulier par calandrage, c'est-à-dire par passage de l'empilage desdits éléments constitutifs, que l'on désignera aussi par vitrage dans la suite de la description, entre des moyens supérieurs et des moyens inférieurs de pressage.

Les dispositifs connus de calandrage, décrits par exemple dans la publication de brevet français 2 053 104, sont généralement équipés de deux séries de galets ou rouleaux de pressage : une série de rouleaux inférieurs disposés les uns à côté des autres, leur position pouvant être réglée indépendemment de façon à obtenir une courbure correspondant à la courbure transversale désirée qui est généralement la courbure moyenne du vitrage, et une série de rouleaux supérieurs disposés sensiblement de la même façon. Dans les dispositifs connus, les deux séries de rouleaux sont montées chacune sur une poutre transversale appartenant à un cadre pouvant pivoter autour d'un axe horizontal, l'ensemble constituant un équipage mobile, de sorte que les rouleaux restent sensiblement perpendiculaires au vitrage durant toute l'opération d'assemblage.

Au cours du passage du vitrage entre les rouleaux, la position de ces rouleaux doit varier pour suivre les modifications de la courbure transversale du vitrage. A cette fin, on a déjà proposé dans la publication de brevet européen EP 0 189 345 une calandreuse utilisant des vérins pneumatiques procurant une grande souplesse aux rouleaux dans le suivi de la courbure du vitrage. Dans cette calandreuse, dite "flottante", les chambres de compression des vérins des rouleaux supérieurs et celles des vérins des rouleaux inférieurs sont en communication et la pression pneumatique s'exerçant sur un rouleau de pression est égale à celle s'exerçant sur un rouleau de contre-pression.

Ces dispositifs conviennent généralement pour l'assemblage des vitrages présentant un bombage transversal peu accentué et régulier et lorsque ce bombage transversal du vitrage est sensiblement le même sur toute la longueur du vitrage. Mais pour des vitrages à formes plus complexes, notamment pour des vitrages présentant un bombage très profond dans la section transversale et/ou irrégulier sur la longueur du vitrage, ces dispositifs connus ne sont pas toujours satisfaisants, car ils ne sont pas suffisamment souples pour pouvoir suivre toutes les modifications importantes de courbure. Si la pression des rouleaux est trop faible, il s'ensuit une adhésion insuffisante ou peu homogène des éléments constitutifs du vitrage ou, au contraire, si la pression est trop forte des ruptures du vitrage.

Pour augmenter la souplesse du dispositif, la demanderesse propose d'utiliser des rouleaux de faible largeur et d'en augmenter le nombre. Mais cette proposition entraîne un autre problème, celui de l'encombrement des vérins pneumatiques disposés les uns à côté des autres dans le plan vertical passant par la ligne de pressage.

L'invention obvie aux inconvénients cités.

L'invention propose un dispositif pour l'assemblage par pressage des vitrages feuilletés symétriques ou asymétriques, capable d'opérer aussi bien sur des vitrages à double bombage peu accentué et régulier que sur des vitrages à formes complexes pouvant présenter des bombages très accentués et/ou irréguliers. Par double bombage, on entend selon l'invention, un vitrage présentant à la fois une courbure longitudinale et à la fois une courbure transversale. Par vitrages feuilletés symétriques, on entend selon l'invention des vitrages feuilletés dont les deux faces sont constituées de feuilles rigides telles des feuilles de verre. Par vitrages feuilletés asymétriques, on entend des vitrages feuilletés formés d'un support rigide monolithique ou feuilleté et d'une feuille souple en matière plastique ayant les propriétés désirées, par exemple les vitrages asymétriques décrits dans les publications de brevets français 2 398 606 et européens 0 132 198 et 0 131 523.

Le dispositif selon l'invention comprend au moins un ensemble s'étendant transversalement de rouleaux de pressage montés à l'extrémité des tiges d'au moins un ensemble de vérins, les vérins de l'ensemble étant placés de façon alternée dans au moins deux sous-ensembles disposés dans au moins deux plans différents.

Selon une réalisation du dispositif selon l'invention, celui-ci comprend un ensemble de rouleaux de pression et un ensemble de rouleaux de contre-pression montés a l'extrémité de la tige de vérins pneumatiques, les vérins étant au moins en partie pour les rouleaux de pression et de même pour les rouleaux de contre-pression disposés dans au moins deux plans différents et de façon alternée.

Avantageusement les chambres de pression actionnant les rouleaux se faisant face sont raccordées de sorte que chaque rouleau de pression est en équilibre de pression avec le rouleau de contre-pression qui lui fait face.

En disposant des vérins voisin dans des plans différents et de façon alternée, aussi bien pour les vérins actionnant les rouleaux de pression que pour les vérins actionnant les rouleaux de contre-pression, on résoud le problème d'encombrement et on peut aussi augmenter le nombre de vérins pour un même ensemble de pressage et par là augmenter le nombre de rouleaux, ce qui permet en conséquence d'en diminuer la largeur et d'améliorer le pressage.

La disposition de façon alternée et dans des plans différents peut être utilisée pour tous les vérins d'un ensemble de rouleaux de pressage.

Dans une variante, cette disposition est utilisée par section (s) seulement, cette ou ces sections correspondant à ou aux emplacements des rouleaux de pressage agissant sur les parties des vitrages présentant des courbures difficiles telles des courbures très accentuées et profondes.

Selon une réalisation du dispositif selon l'invention, les ensembles de pressage et notamment les vérins d'une même série ou d'un même ensemble de rouleaux sont placés dans deux plans symétriques et inclinés par rapport au plan du cadre sur lequel sont montés les éléments de pressage. Par élément de pressage, on entend, le rouleau, le vérin qui le commande et les différents moyens intermédiaires entre le rouleau et le vérin. Le plan du cadre correspond au plan moyen de pressage. C'est aussi le plan vertical lorsque le cadre est pivotant et qu'il est en position d'équilibre. Les deux plans inclinés passent par la ligne moyenne de pressage qui correspond aussi à l'axe de pivotement lorsque le cadre est pivotant.

L'inclinaison des plans contenant les vérins dépend de l'encombrement du corps des vérins et aussi de la longueur des tiges des vérins. Généralement, une inclinaison de 10 à 20 degrés de part et d'autre du plan vertical est suffisante.

Dans une variante, les vérins d'un même ensemble de rouleaux de pressage sont placés les uns dans le plan vertical passant par la ligne de pressage et les autres de façon alternée avec les premiers dans un plan incliné par rapport au plan vertical.

Dans une autre variante, les vérins d'un même ensemble de rouleaux sont placés de façon alternée dans trois plans, deux plans inclinés et un plan vertical médian.

Bien que l'action des vérins ne s'exerce plus dans un même plan de pressage, l'opération de calandrage peut s'effectuer néanmoins correctement dans la mesure où l'angle que fait la force de pressage avec la direction normale à la face du vitrage à calandrer n'est pas très important. La direction normale à la face du vitrage à calandrer est généralement contenue dans le plan de pressage moyen. En revanche, pour des angles d'inclinaison des vérins plus importants, par exemple de 45 degrés et plus par rapport au plan de pressage, il faut alors transmettre l'action des vérins inclinés aux rouleaux par l'intermédiaire d'organes intermédiaires et d'articulations.

Dans une autre forme de réalisation de l'invention, les vérins sont alternés dans aux moins deux plans verticaux, l'un au moins étant différent du plan vertical passant par la ligne de pressage. L'action des vérins disposés dans le ou les plans différents des plans passant par le ligne de pressage étant alors transmise aux rouleaux par l'intermédiaire d'organes et d'articulations comme précédemment.

Selon une caractéristique avantageuse de l'invention, chaque vérin actionne une paire de rouleaux reliés entre-eux par un système d'articulations tel un système à parallèlogrammes, permettant le mouvement relatif d'un rouleau par rapport à l'autre dans la direction du pressage.

Lorsque les vérins utilisés sont des vérins à membrane à pression équilibrée, on peut avantageusement munir au moins la tige des vérins inférieurs d'un ressort pneumatique ou mécanique afin de compenser le poids des éléments de pressage et/ou d'assurer le maintien d'une longueur désirée pour la tige des vérins.

Selon une caractéristique du dispositif selon l'invention, l'ensemble de rouleaux de pressage supérieurs et l'ensemble de rouleaux de pressage inférieurs font partie d'un équipage mobile, lui-même monté sur des moyens le rendant pivotant sensiblement autour de la ligne de pressage. Avantageusement, en outre, lesdits moyens le rendant pivotant sont prévus pour procurer à l'équipage mobile une possibilité de déplacement vertical selon un mouvement de montée-baisse. Un équipage mobile monté pivotant et coulissant verticalement est décrit par exemple dans la publication de brevet européen EP 0 290 344.

D'autres avantages et caractéristiques de l'invention apparaitront dans la description suivante d'exemples de réalisations du dispositif selon l'invention, fait en référence aux figures.

La figure 1 représente de face et en élévation, une réalisation d'un dispositif comprenant un ensemble de rouleaux supérieurs de pressage et un ensemble de rouleaux inférieurs de pressage, ces rouleaux étant montés de façon alternée selon deux plans symétriques inclinés par rapport au plan vertical d'équilibre du cadre.

La figure 2 est une vue de côté de deux ensembles de rouleaux de pressage supérieurs montés de façon alternée, du dispositif de la figure 1.

La figure 3 représente une variante d'un montage de deux ensembles de rouleaux de pressage montés de façon alternée et suivant deux plans.

La figure 4 représente une partie de l'ensemble de pressage équipé de deux rouleaux actionnés par un même vérin.

La figure 5 représente un ensemble de pressage équipé de deux rouleaux actionnés par un vérin disposé selon un plan vertical différent de celui du plan de pressage.

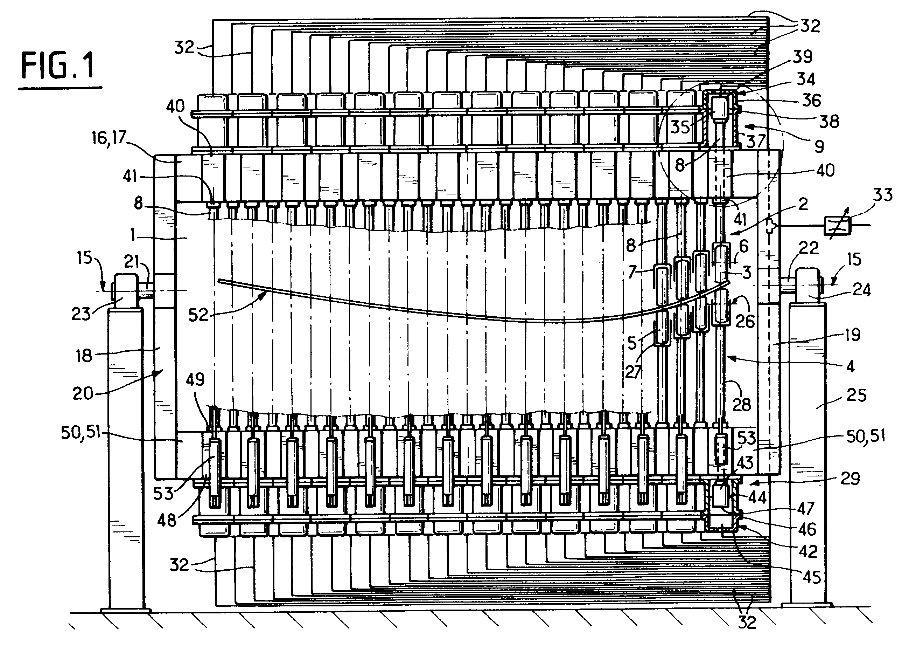

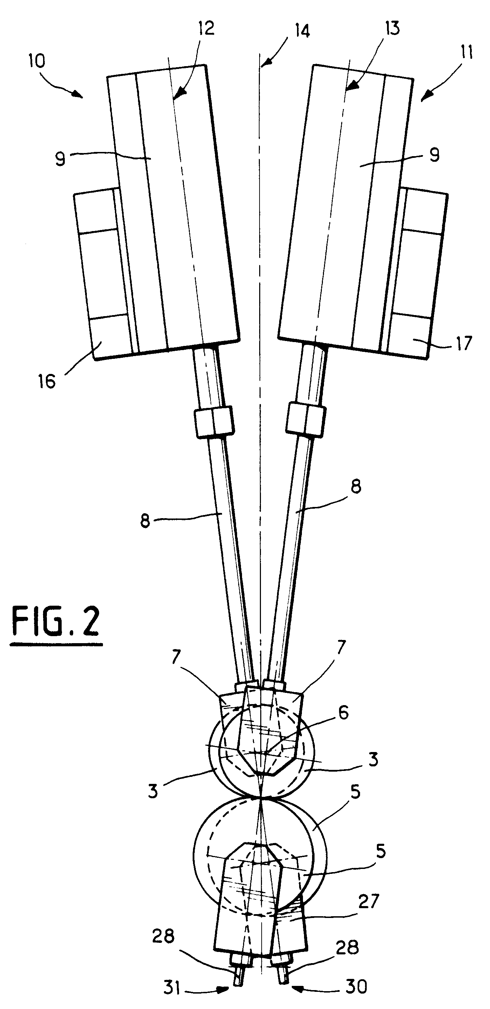

Le dispositif représenté sur la figure 1 et sur la figure 2 qui est une vue partielle et aggrandie de côté du dispositif de la figure 1, comprend un équipage mobile 1 muni d'un ensemble supérieur de pressage 2 comprenant des rouleaux supérieurs 3 de pressage et d'un ensemble inférieur de pressage 4 comprenant des rouleaux inférieurs de pressage 5 (tous les rouleaux ne sont pas représentés).

Les rouleaux supérieurs 3 sont montés en rotation autour d'axes 6 portés par des chapes 7 placées au bout de la tige 8 de vérins pneumatiques 9 à membrane décrits plus en détail par la suite.

Les rouleaux supérieurs 3 et leur vérins 9 sont regroupés en deux sous-ensembles 10, 11 dont les éléments sont alternés. Chacun des deux sous-ensemble est disposé dans un plan incliné 12, 13 par rapport au plan vertical 14 dans la position d'équilibre de l'équipage mobile 1. Les deux plans inclinés 12, 13 d'un angle de 15 degrés environ chacun de part et d'autre du plan vertical 14, passent par l'axe de pivotement 15 de l'équipage mobile.

Les deux sous-ensembles 10, 11 de vérins appartenant à l'ensemble des moyens de pressage supérieurs 3 sont montés sur deux poutres horizontales parallèles 16, 17 portées par les deux montants 18, 19 d'un cadre mobile 20, monté sur deux arbres horizontaux 21, 22 alignés, tournant dans des paliers 23, 24 portés par le bâti 25. Dans une réalisation ( non représentée ) du dispositif, il peut être prévu un montage des arbres horizontaux permettant un mouvement de montée-baisse du cadre mobile par rapport au bâti.

Les rouleaux inférieurs 5 sont de la même façon montés tournant autour d'axes 26 portés par des chapes 27 placées en bout de la tige 28 de vérins pneumatiques 29 à membrane, et regroupés en deux sous-ensembles 30, 31 placés dans les deux plans inclinés 12, 13 contenant déjà les rouleaux supérieurs et leurs ensembles de montage avec leurs vérins pneumatiques 9.

L'ensemble des rouleaux inférieurs 5 comprend au moins un rouleau-moteur entraîné par l'intermédiaire d'un système de transmission par un moteur (non représentés), qui avantageusement est placé sur le cadre mobile 20 à l'emplacement désiré et participe ainsi à l'équilibrage de l'équipage mobile 1.

Un dispositif avantageux pour l'entraînement des rouleaux-moteurs d'une calandreuse est décrit par exemple dans la demande de brevet français 88 14741. Ce dispositif comprend, un arbre de transmission fixe et non déformable monté sur le cadre mobile, relié au moteur par une chaîne ou une courroie et à chaque rouleau-moteur par l'intermédiaire d'un système de transmission comprenant un renvoi d'angle et un ensemble articulé déformable dans une direction essentiellement verticale. L'ensemble articulé déformable est avantageusement formé d'un arbre sensiblement vertical comprenant deux cardans et un arbre cannelé.

La pression pneumatique qui actionne les rouleaux de pressage est introduite à l'aide de conduits 32 dans le corps des vérins et la pression peut être réglée à une valeur souhaitée à l'aide d'une valve 33 pour chacun des équipages élémentaires travaillant en opposition l'un de l'autre indépendamment des systèmes voisins.

Les vérins pneumatiques utilisés sont ceux décrits par exemple dans la publication de brevet européen EP 0 189 345. Chaque vérin 9 de l'ensemble de pressage supérieur est formé d'un caisson pneumatique 34 cylindrique dans lequel se déplace un piston 35 monté sur l'extrémité supérieure de la tige de piston 8.

Le caisson pneumatique 34 est formé de deux parties 36, 37 qui sont boulonnées l'une à l'autre par l'intermédiaire d'un assemblage à brides 38. Entre les deux brides de l'assemblage est pincée une membrane en caoutchouc 39. La pression pneumatique introduite par la conduite de pression 32 dans le caisson pneumatique 34 agit sur la membrane 39 qui transmet la pression au piston 35. Le caisson pneumatique est fixé sur une console 40 qui forme également le support pour une douille de guidage à billes 41. Dans cette douille de guidage à billes 41, la tige de piston 8 coulisse avec un minimum de perte par friction. La tige de piston 8 est empêchée de manière adéquate de tourner autour de son axe. Les consoles individuelles 40 sont disposées pour chaque sous-ensemble de vérins les unes à côté des autres, de façon alternée sur les deux poutres horizontales parallèles 9, 10, appartenant au cadre mobile 13.

Chaque vérin 29 de l'ensemble de pressage inférieur comprend comme pour les vérins décrits précédemment pour l'ensemble de pressage supérieur, un caisson pneumatique 42 dans lequel se déplace un piston 43. Le caisson pneumatique cylindrique 42 est constitué de deux parties 44, 45 reliées par un assemblage 46. Entre les brides de l'assemblage est pincée une membrane élastique 47 qui transmet au piston 43 la pression pneumatique amenée dans le caisson pneumatique par la conduite d'alimentation 32. Le cylindre de pression 42 est monté sur une console 48 qui forme un même temps le support de montage pour le guidage de la douille à billes 49 dans laquelle la tige du piston 28 coulisse sans friction. Les consoles 48 sont montées les unes à côté des autres, de façon alternée sur les deux poutres horizontales parallèles 50, 51, appartenant au cadre mobile 13.

Sous l'effet de leur poids propre, les équipages mobiles élémentaires dans le sens vertical qui portent le rouleau de pression 3 et le rouleau de contre-pression 5 occuperaient toujours une position d'extrémité inférieure aussi longtemps qu'ils ne sont pas soulevés dans une position supérieure par le produit feuilleté à calandrer 52 lui-même. Après le passage d'un produit feuilleté à calandrer 52, ils descendraient donc tous dans leur position d'extrémité inférieure et devraient être remontés partiellement par la feuille de verre rigide du produit à calandrer 52. De cette façon, des forces de cintrage supplémentaires agiraient sur la feuille de verre. Pour éviter de soumettre la feuille de verre à de telles sollicitations, un ressort pneumatique 53 est monté entre la chape 27 et la console 48, ce ressort étant dimensionné ou réglé d'une manière telle que le poids propre des équipages mobiles soit compensé. On utilise avantageusement un ressort pneumatique 53 à courbe caractéristique linéaire. Grâce à la présence du ressort pneumatique 53, les forces de réglage dans le cas d'un changement de position des rouleaux de pression sont extrêmement faibles, de sorte que l'adaptation de la position en hauteur des rouleaux de pression à la forme de la feuille de verre s'effectue uniquement à l'intervention de la feuille de verre introduite entre les rouleaux et n'exige aucune mesure d'ajustement supplémentaire. Après le passage de la feuille de verre entre les paires de rouleaux, les rouleaux de pression restent dans la position en hauteur qu'ils occupaient sous l'action de la feuille de verre soulevée.

Dans une variante, on peut remplacer le ressort pneumatique 53 par un ressort mécanique à boudin que l'on peut alors placer autour de la tige 28 des vérins 29.

Sur la figure 2, on voit mieux la disposition des deux sous-ensembles 10, 11 de pressage supérieurs dans deux plans inclinés par rapport au plan vertical qui est le plan d'équilibre du dispositif. On peut remarquer qu'un angle d'environ 15 degrés de part et d'autre du plan vertical 14 est suffisant pour libérer l'espace nécessaire au montage d'un nombre double de vérins.

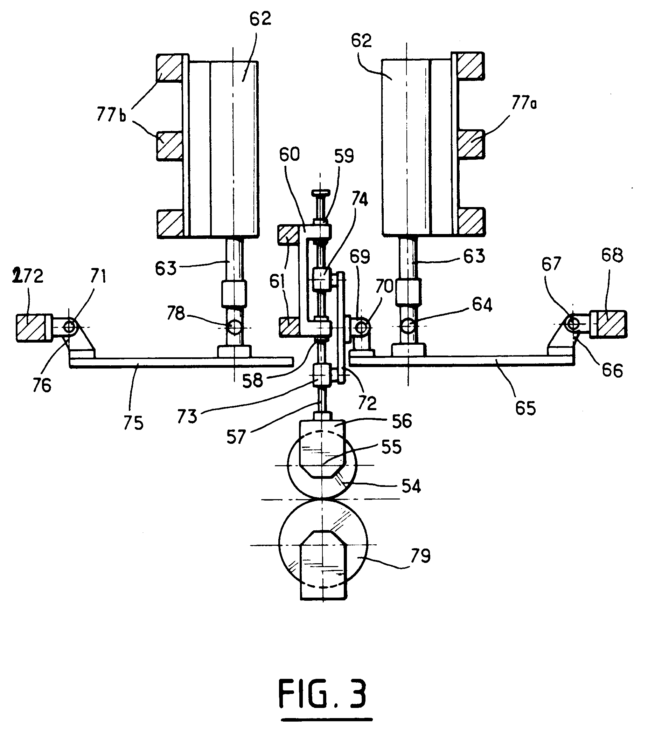

Sur la figure 3, on a représenté une variante de montage des deux ensembles de rouleaux de pressage. Dans cette variante, le problème de l'encombrement des vérins pour un même ensemble de rouleaux de pressage est résolu en alternant la position des vérins selon deux sous-ensembles dans deux plans parallèles au plan vertical d'équilibre du dispositif, et en associant à chaque vérin un système d'articulation transmettant la force du vérin sur le rouleau de pressage auquel il est associé.

Ainsi, le rouleau supérieur de pressage 54 est monté tournant autour d'un axe 55 porté par une chape 56 monté au bout d'une tige coulissante 57 verticalement et guidée dans ce mouvement par deux alésages 58, 59, portés par un support 60 fixé à une poutre horizontale 61 appartenant au cadre sur lequel sont montés les ensembles de pressage supérieurs et inférieurs. Le mouvement de montée-baisse du rouleau presseur 54 est commandé par un vérin pneumatique 62 à membrane monté sur la poutre 77a dont la tige 63 appuie par l'intermédiaire d'un montage articulé 64 sur un levier 65, lui-même articulé d'un côté par l'intermédiaire d'une oreille 66 autour d'un axe 67 porté par une poutre 68 solidaire du cadre. L'autre extrémité du levier est articulée autour d'un axe 69 monté dans une fenêtre 70 d'un support porté par une plaque 72 solidaire de deux bagues 73, 74 fixées à la tige coulissante 57. Le rouleau presseur suivant (non représenté) est commandé par un système analogue appartenant à l'autre sous-ensemble. Le levier 75 est monté articulé par l'intermédiaire d'une oreille 76 autour de l'axe 71 porté par une poutre 72 solidaire du cadre. L'action de pressage est commandée par le vérin 62 fixé à la poutre 77b du cadre, la tige 63 du vérin étant rattachée au levier 75 par un montage articulé 78. Sur la figure 3, on a représenté une partie seulement de l'ensemble de pressage inférieur comprenant les rouleaux 79.

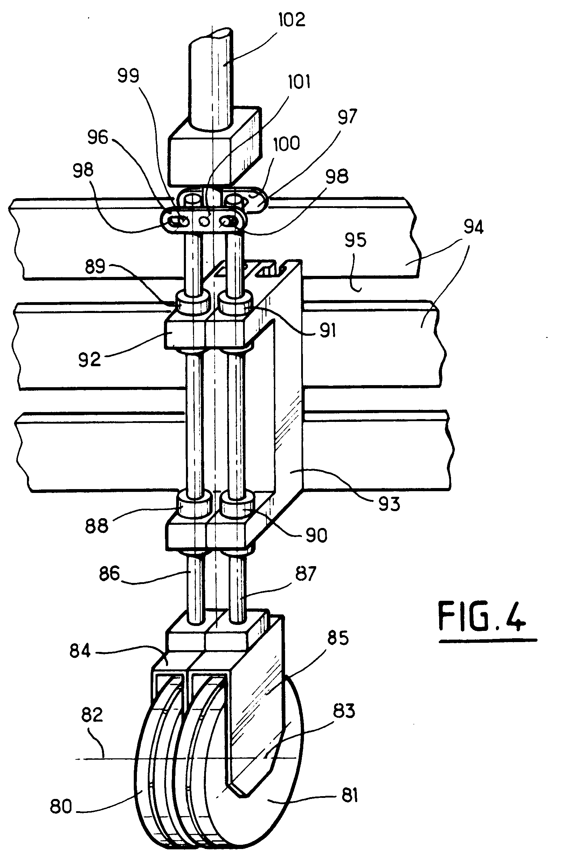

Sur la figure 4, on a représenté un élément de pressage supérieur équipé de deux rouleaux 80, 81 actionnés par un même vérin. Les deux rouleaux 80, 81 sont montés tournant autour d'axes 82, 83 portés par des chapes 84, 85 montées aux bouts de deux tiges 86, 87 parallèles, coulissantes dans des bagues 88, 89, 90, 91 portées par des supports 92, 93 fixés à une poutre 94 appartenant au cadre de la calandreuse. La poutre 94 présente des rainures 95 permettant le réglage de la position des supports 92, 93. Les deux tiges 86, 87 sont reliées entre-elles par deux pièces 96, 97 à trous oblongs 98 traversés par deux axes 99, 100. Les deux pièces 96, 97 sont montées pivotantes autour d'un axe 101 porté par l'extrémité de la tige 102 d'un vérin pneumatique non représenté sur cette figure. Le montage des deux tiges 86, 87 et du type à parallèlogrammes articulés, les deux tiges restant parallèles et à distance fixe l'une de l'autre, et il permet un mouvement relatif en profondeur d'un rouleau par rapport à l'autre dans la direction de pressage.

Ce type de montage de deux rouleaux sur un même vérin permet de doubler le nombre de rouleaux et d'augmenter l'efficacité du pressage notamment dans les parties de la ligne de pressage ou les courbures sont très accentuées .

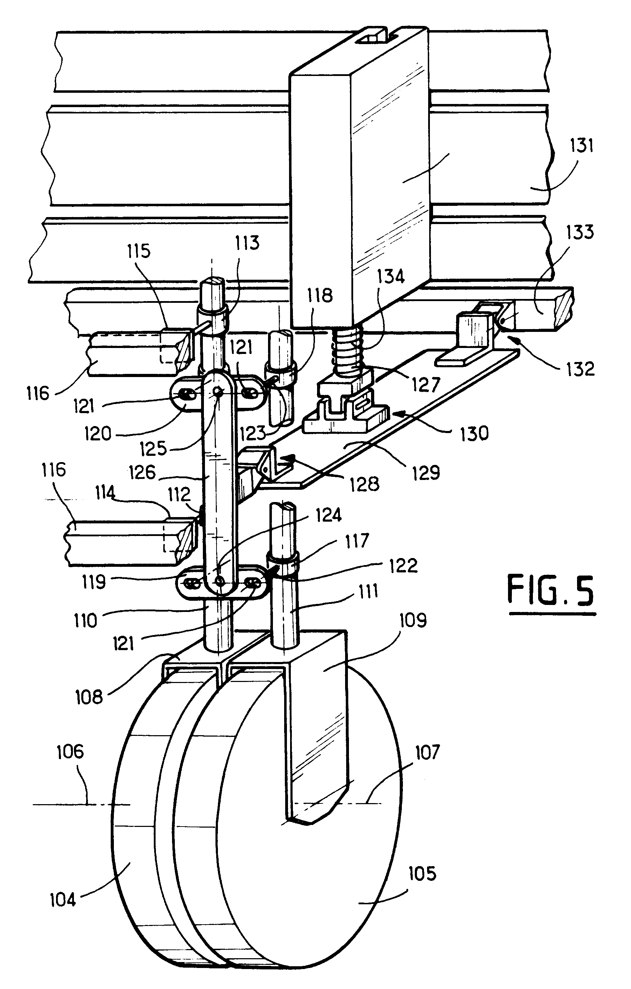

Sur la Figure 5, on a représenté un élément de pressage supérieur équipé de deux rouleaux 104, 105 actionnés par un même vérin 103 disposé comme dans le cas du dispositif décrit en relation avec la figure 3 dans un plan parallèle au plan de pressage et différent de celui-ci.

Les deux rouleaux 104, 105 sont comme les précédents, montés tournant autour d'axes 106, 107 portés par deux chapes 108, 109 montées au bout de deux tiges 110, 111, parallèles, coulissantes dans des bagues (seules les bagues 112 et 113 de la tige 110 sont représentées) portées par des supports 114, 115 fixés à une poutre 116 appartenant au cadre de la calandreuse. Des bagues solidaires des deux tiges 110, 111, (seules les bagues 117, 118 solidaires de la tige 111 sont représentées) sont montées sur des pièces 119, 120 munies de trous oblongs 121 au moyens d'axes 122, 123. Les deux pièces 119, 120 sont montées pivotantes autour d'axes 124, 125 portés par une pièce intermédiaire 126 rattachée à la tige 127 du vérin pneumatique 103 par un système d'articulation 128, un levier 129 et un autre système d'articulation 130 monté au bout de la tige 127 du vérin 103 qui lui est monté sur une poutre 131. L'autre extrémité du levier est montée par l'intermédiaire d'un système d'articulation 132 sur une autre poutre 133 appartenant au cadre de la calandreuse. Un ressort 134 de maintien de la distance entre le vérin et l'articulation peut être prévu autour de la tige 127 du vérin 103.

Lorsque le dispositif selon l'invention est une calandreuse comprenant un ensemble de rouleaux supérieurs et un ensemble de rouleaux inférieurs, chacun de ces ensembles est monté suivant au moins deux sous-ensembles dans des plans différents.

Dans une variante, le dispositif selon l'invention comprend un ensemble de rouleaux inférieurs de pressage, divisé en sous-ensembles, et il comprend en tant que moyens de pressage supérieurs un rouleau presseur cylindrique souple s'étendant sur toute la largeur utile du dispositif, la courbure désirée du rouleau presseur étant fournie par l'action d'appui d'un ensemble de galets supérieurs, comme décrit par exemple dans la publication de brevet européen EP 0 015 209. Dans cette variante, l'ensemble des galets supérieurs peut également être divisé en au moins deux sous-ensembles placés dans des plans différents.

Ce dispositif est utilisé avantageusement pour la fabrication de vitrages asymétriques formés d'une feuille souple et d'un support rigide, le rouleau presseur cylindrique venant presser la feuille de matière plastique souple sur le support rigide.

Dans une autre variante, le dispositif de pressage selon l'invention comprend en tant que moyens de pressage supérieurs un ensemble de rouleaux supérieurs de pressage monté conformément à l'invention, en étant divisé en au moins deux sous-ensembles placés dans deux plans différents et un support de forme adaptée à la géométrie du vitrage en tant que moyens de pressage inférieurs, ce support pouvant être monté basculant autour d'un ou plusieurs axes horizontaux. Un dispositif de pressage utilisant un support de forme est décrit dans la publication de brevet européen 0 316 224. Ce dispositif peut aussi être équipé d'un rouleau presseur cylindrique souple lorsqu'il est utilisé pour l'assemblage des vitrages asymétriques. Dans ce cas, les galets ou rouleaux supérieurs qui viennent appuyer sur le rouleau souple pour lui donner la courbure désirée peuvent être divisés en au moins deux sous-ensembles placés dans deux plans différents.

## Revendications

1. Dispositif pour l'assemblage par pressage d'un vitrage feuilleté (52) comprenant au moins un ensemble (2, 4) s'étendant transversalement de rouleaux de pressage (3, 5) montés à l'extrémité des tiges (8, 28) d'au moins un ensemble de vérins (9, 29), caractérisé en ce que les vérins de l'ensemble sont placés de façon alternée dans au moins deux sous-ensembles (10, 11, 30, 31) disposés dans au moins deux plans différents.

2. Dispositif selon la revendication 1, caractérisé en ce qu'il comprend un ensemble (2) de rouleaux de pressage supérieurs (3) et un ensemble (4) de rouleaux de pressage inférieurs (5), ces ensembles étant chaque fois montés à l'extrémité des tiges (8, 28) d'un ensemble de vérins (9, 29) divisés en au moins deux sous-ensembles (10, 11, 30, 31) placés dans au moins deux plans différents et de façon alternée.

3. Dispositif selon une des revendications 1 ou 2, caractérisé en ce que les sous-ensembles de vérins de chaque ensemble sont placés dans au moins deux plans différents, l'un au moins étant incliné par rapport à un plan de pressage moyen.

4. Dispositif selon la revendication 3, caractérisé en ce que les sous-ensembles de vérins sont placés dans deux plans inclinés symétriques d'un plan de pressage moyen.

5. Dispositif selon la revendication 3, caractérisé en ce qu'au moins un sous-ensemble de vérins est incliné et qu'il est prévu des moyens articulés permettant de transférer l'action desdits vérins sur les rouleaux auxquels ils sont reliés.

6. Dispositif selon une des revendications 1 ou 2, caractérisé en ce que les sous-ensembles de vérins (62) de chaque ensemble sont placés dans au moins deux plans parallèles, au moins un sous-ensemble de vérins étant muni de moyens articulés (64, 65, 66, 69, 70) permettant de transférer l'action desdits vérins sur les rouleaux (54) auxquels ils sont reliés (Fig. 3).

7. Dispositif selon une des revendications 2 à 6, caractérisé en ce que les chambres de compression des vérins (9) des sous-ensembles de l'ensemble de pressage supérieur sont connectées aux chambres de compression des vérins (29) leur faisant face des sous-ensembles de l'ensemble de pressage inférieur.

8. Dispositif selon une des revendications 1 à 7, caractérisé en ce qu'il comprend en tant que moyen de pressage supérieur un rouleau presseur cylindrique souple s'étendant sur toute la largeur utile du dispositif et cintré sous l'action de rouleaux de pressage supérieurs.

9. Dispositif selon une des revendications 1 à 8, caractérisé en ce qu'il comprend un support de forme en tant que moyens de pressage inférieurs.

10. Dispositif selon une des revendications 1 à 9, caractérisé en ce que l'ensemble de rouleaux de pressage sont montés sur un cadre pivotant (20).

11. Dispositif selon la revendication 10, caractérisé en ce que le cadre pivotant est monté sur des moyens leur procurant un mouvement de montée-baisse.

12. Dispositif selon une des revendications 10 ou 11, caractérisé en ce qu'il comprend au moins un rouleau moteur relié à un moteur par un système de transmission comprenant un arbre fixe et non déformable monté sur le cadre mobile, relié au moteur par une chaîne ou courroie et à chaque rouleau moteur par l'intermédiaire d'un système de transmission comprenant un renvoi d'angle et un ensemble articulé déformable dans une direction essentiellement verticale.

13. Dispositif selon une des revendications 1 à 12, caractérisé en ce qu'au moins une partie des vérins comprend des vérins actionnant deux rouleaux (80, 81) à la fois, les deux rouleaux (80, 81) d'un même vérin pouvant se déplacer relativement l'un par rapport à l'autre dans la direction du pressage (Fig. 4).

## Claims

1. Apparatus for the assembly by pressing of a laminated glass plate (52) comprising at least one assembly (2,4) extending transversely of the pressing rollers (3,5) mounted at the end of the rods (8,28) of at least one group of jacks (9,29), characterized in that the jacks of the group are placed in alternating manner in at least two subgroups (10,11,30,31) in at least two different planes.

2. Apparatus according to claim 1, characterized in that it comprises an assembly (2) of upper pressing rollers (3) and an assembly (4) of lower pressing rollers (5), said assemblies being on each occasion mounted at the end of rod (8,28) of a group of jacks (9,29) subdivided into at least two subgroups (10,11, 30,31) placed in at least two different planes in an alternating manner.

3. Apparatus according to one of the claims 1 or 2, characterized in that the subgroups of jacks of each group are placed in at least two different planes, at least one being inclined with respect to an average pressing plane.

4. Apparatus according to claim 3, characterized in that the subgroups of jacks are placed in two planes inclined symmetrically relative to an average pressing plane.

5. Apparatus according to claim 3, characterized in that at least one subgroup of jacks is inclined and articulated means are provided making it possible to transfer the action of said jacks to the rollers to which they are connected.

6. Apparatus according to one of the claims 1 or 2, characterized in that the subgroups of jacks (62) of each group are placed in at least two parallel planes, at least one subgroup of jacks being provided with articulated means (64,65,66,69,70) making it possible to transfer the action of said jacks to the rollers (54) to which they are connected (fig. 3).

7. Apparatus according to one of the claims 2 to 6, characterized in that the compression chambers of the jacks (9) of the subgroups of the subassemblies of the upper pressing assembly are connected to the compression chambers of the jacks (29) facing them of the subassemblies of the upper pressing assembly.

8. Apparatus according to one of the claims 1 to 7, characterized in that it comprises as the upper pressing means a flexible cylindrical pressing roller extending over the entire useful width of the apparatus and bent under the action of the upper pressure rollers.

9. Apparatus according to one of the claims 1 to 8, characterized in that it comprises a shape support as lower pressing means.

10. Apparatus according to one of the claims 1 to 9, characterized in that the pressing rollers are mounted on a pivoting frame (20).

11. Apparatus according to claim 10, characterized in that the pivoting frame is mounted on means giving it a raising-lowering movement.

12. Apparatus according to one of the claims 10 or 11, characterized in that it comprises a motor roller connected to a motor by a transmission system incorporating a fixed, non-deformable shaft mounted on the mobile frame, connected to the motor by a chain or belt and to each motor roller via a transmission system incorporating a bevel gear and an articulated assembly deformable in a substantially vertical direction.

13. Apparatus according to one of the claims 1 to 12, characterized in that at least part of the jacks comprises jacks actuating two rollers (80,81) at once, the two rollers (80,81) of the same jack being able to move relative to one another in the pressing direction (fig. 4).

## Patentansprüche

1. Vorrichtung zur Herstellung einer Verbundverglasung (52) durch Pressen, welche wenigstens einen Satz (2, 4) quer verlaufender Preßrollen (3, 5) umfaßt, die am Ende von Stangen (8, 28) wenigstens einer Zylindereinheit (9, 29) angebracht sind, **dadurch gekennzeichnet, daß** die Zylinder der Einheit abwechselnd in wenigstens zwei Untereinheiten (10, 11, 30, 31) angeordnet sind, die in wenigstens zwei unterschiedlichen Ebenen angeordnet sind.

2. Vorrichtung nach Anspruch 1, **dadurch gekennzeichnet, daß** sie einen Satz (2) aus oberen Preßrollen (3) und einen Satz (4) aus unteren Preßrollen (5) umfaßt, wobei diese Sätze jeweils am Ende der Stangen (8, 28) einer Zylindereinheit (9, 29) angebracht sind, die abwechselnd auf wenigstens zwei Untereinheiten (10, 11, 30, 31) aufgeteilt sind, die in wenigstens zwei unterschiedlichen Ebenen angeordnet sind.

3. Vorrichtung nach Anspruch 1 oder 2, **dadurch gekennzeichnet, daß** die Zylinder-Untereinheiten jedes Satzes in wenigstens zwei unterschiedlichen Ebenen angeordnet sind, von denen wenigstens eine in bezug auf eine mittlere Preßebene geneigt ist.

4. Vorrichtung nach Anspruch 3, **dadurch gekennzeichnet, daß** die Zylinder-Untereinheiten in zwei zu einer mittleren Preßebene symmetrisch geneigten Ebenen angeordnet sind.

5. Vorrichtung nach Anspruch 3, **dadurch gekennzeichnet, daß** wenigstens ein Zylinder-Untereinheit geneigt ist **und daß** gelenkige Mittel vorgesehen sind, welche die Übertragung der Wirkung dieser Zylinder auf die Rollen erlauben, die mit ihnen verbunden sind.

6. Vorrichtung nach Anspruch 1 oder 2, **dadurch gekennzeichnet, daß** die Untereinheiten aus Zylindern (62) jedes Satzes in wenigstens zwei parallelen Ebenen angeordnet sind, wobei wenigstens eine Zylinder-Untereinheit mit gelenkigen Mitteln (64, 65, 66, 69, 70) versehen ist, welche die Übertragung der Wirkung der Zylinder auf die Rollen (54) erlauben, die mit ihnen verbunden sind (Fig. 3).

7. Vorrichtung nach einem der Ansprüche 2 bis 6, **dadurch gekennzeichnet, daß** die Kompressionskammern der Zylinder (9) der Untereinheit des oberen Preßsatzes mit den ihn gegenüberstehenden Kompressionskammern der Zylinder (29) der Untereinheit des unteren Preßsatzes verbunden sind.

8. Vorrichtung nach einem der Ansprüche 1 bis 7, **dadurch gekennzeichnet, daß** sie als oberes Druckmittel eine nachgiebige zylindrische Preßrolle umfaßt, die sich über die gesamte Nutzbreite der Vorrichtung erstreckt und unter der Wirkung von oberen Preßrollen gebogen wird.

9. Vorrichtung nach einem der Ansprüche 1 bis 8, **dadurch gekennzeichnet, daß** sie als unteres Druckmittel einen geformten Träger umfaßt.

10. Vorrichtung nach einem der Ansprüche 1 bis 9, **dadurch gekennzeichnet, daß** der Preßrollensatz auf einem Schwenkrahmen (20) angebracht ist.

11. Vorrichtung nach Anspruch 10, **dadurch gekennzeichnet, daß** der Schwenkrahmen auf Mitteln befestigt ist, welche ihm eine Hub-Senk-Bewegung erlauben.

12. Vorrichtung nach Anspruch 10 oder 11, **dadurch gekennzeichnet, daß** sie wenigstens eine Antriebsrolle umfaßt, die an einen Motor über ein Transmissionssystem angeschlossen ist, das eine auf dem beweglichen Rahmen angebrachte feste und unverformbare Welle enthält, die mit dem Motor durch eine Kette oder einen Treibriemen und mit jeder Antriebsrolle über ein Transmissionssystem verbunden ist, das einen Winkeltrieb und einen gelenkigen Aufbau enthält, der in einer im wesentlichen vertikalen Richtung verformbar ist.

13. Vorrichtung nach einem der Ansprüche 1 bis 12, **dadurch gekennzeichnet, daß** wenigstens ein Teil der Zylinder Zylinder umfaßt, die zwei Rollen (80, 81) gleichzeitig betätigen, wobei sich diese beiden Rollen (80, 81) ein und desselben Zylinders relativ zueinander in Preßrichtung bewegen können (Fig 4).
